**Europäisches Patentamt**

**European Patent Office**

**Office européen des brevets**

(19)

(11) Veröffentlichungsnummer : **0 185 869**
**B1**

(12) **EUROPÄISCHE PATENTSCHRIFT**

(45) Veröffentlichungstag der Patentschrift :
**15.06.88**

(21) Anmeldenummer : **85112966.8**

(22) Anmeldetag : **12.10.85**

(51) Int. Cl.⁴ : **B 08 B 15/04**, B 23 B 45/00

(54) Befestigungsvorrichtung für eine Bohr- und/oder Absaugglocke an Bohrmaschinen.

(30) Priorität : 11.12.84 DE 3445075

(43) Veröffentlichungstag der Anmeldung :
02.07.86 Patentblatt 86/27

(45) Bekanntmachung des Hinweises auf die Patenterteilung : 15.06.88 Patentblatt 88/24

(84) Benannte Vertragsstaaten :
AT BE CH FR GB IT LI NL

(56) Entgegenhaltungen :
CH-A- 617 611
DE-A- 2 705 410
DE-B- 2 442 812
FR-A- 1 023 242

(73) Patentinhaber : fischerwerke Artur Fischer GmbH &
Co. KG
Weinhalde 14-18
D-7244 Tumlingen/Waldachtal 3 (DE)

(72) Erfinder : Fischer, Artur, Dr. h.c.
Weinhalde 34
D-7244 Waldachtal 3, Tumlingen (DE)

EP 0 185 869 B1

## Beschreibung

Die Erfindung betrifft eine Befestigungseinrichtung für eine Bohrund/oder Absaugglocke an Bohrmaschinen, die einen an der Bohrmaschine verschieb- und festsetzbar gehaltenen Anschlagstab aufweisen, wobei die Befestigungseinrichtung als radial von der Glocke abstehender und zur Wand hin offener U-Träger ausgebildet ist.

Eine derartige Befestigungseinrichtung ist aus der DE-A-2 705 410 bekannt. Die dort beschriebene Absaugvorrichtung ist mit einem seitlich abstehenden Träger ausgerüstet, der über einen Anschlagstab an der Bohrmaschine bzw. an deren Haltegriff befestigt ist. Solche Befestigseinrichtungen sind in der Regel nur für einen Bohrmaschinentyp geeignet, da der Abstand zwischen Anschlagstab und der Mitte der Bohr- und/oder Absaugglocke bei den verschiedenen Bohrmaschinentypen unterschiedlich ist.

Der Erfindung liegt die Aufgabe zugrunde, eine Befestigungseinrichtung für eine Bohr- und/oder Absaugglocke zu schaffen, die auf jede mit einem Anschlagstab versehene Bohrmaschine anpaßbar ist.

Ausgehend von einer Befestigungseinrichtung der eingangs genannten Gattung wird dies dadurch erreicht, daß im Boden des U-Trägers ein radial zur Glocke verlaufendes Langloch ausgebildet ist, und daß ein mit dem Anschlagstab verbundenes, aus Unter- und Oberteil bestehendes Klemmstück an dem U-Träger festsetzbar ist.

Die erfindungsgemäße Lösung ermöglicht es, den üblicherweise an allen Bohrmaschinen vorhandenen Anschlagstab zur Halterung von Bohr- und/oder Absaugglocken zu verwenden. Die unterschiedlichen Abstände des Anschlagstabes von der Achse des Bohrwerkzeuges sind durch Verschiebung des mit dem Anschlagstab verbundenen Klemmstückes an dem radial abstehenden U-Träger der Glocke einstellbar. Die erfindungsgemäße Befestigungseinrichtung erlaubt somit den Anschluß der Bohr- und/oder Absaugglocke an jede mit einem Anschlagstab ausgerüstete Bohrmaschine. Der radial abstehende Träger dient gleichzeitig auch als zusätzliche Auflagefläche, die das rechtwinklige Ausrichten der Bohrmaschine begünstigt.

In einer weiteren Ausgestaltung der Erfindung kann der Boden des U-Trägers zwischen dem miteinander verschraubbaren Ober- und Unterteil des Klemmstückes eingespannt sein. Durch die Verschraubbarkeit von Ober- und Unterteil des Klemmstückes ergibt sich eine einfache Verstell- und Festsetzmöglichkeit.

In weiterer Gestaltung der Erfindung kann das in der offenen Seite eingesetzte Unterteil des Klemmstückes an seiner am Boden des U-Trägers anliegenden Stirnseite, sowie die Innenfläche des Bodens des U-Trägers mit Rastrippen versehen sein. Die ineinandergreifenden Rastrippen verhindern auch bei starken Vibrationen der Bohrmaschine eine unbeabsichtigte Verstellung des Klemmstückes auf dem U-Träger.

Schließlich kann in weiterer Ergänzung der Erfindung das Oberteil des Klemmstückes mit einer dem Profil des Anschlagstabes angepaßten Aufnahme versehen sein. In der Regel handelt es sich bei den Anschlagstäben der Bohrmaschinen um Sechskant- oder Rundprofilstäbe. Bei entsprechender Gestaltung der Aufnahme können beide Stabprofile in die Aufnahme des Oberteiles des Klemmstückes eingepreßt werden. Bei sehr unterschiedlich auftretenden Anschlagstäben muß gegebenenfalls das Oberteil des Klemmstückes ausgewechselt werden.

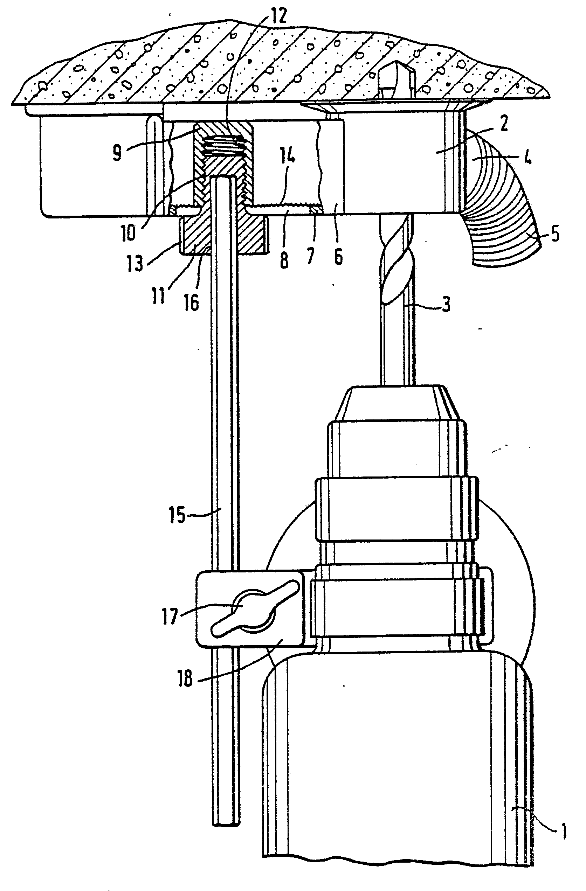

In der Zeichnung ist ein Ausführungsbeispiel der Erfindung dargestellt.

Die an der Bohrmaschine 1 befestigte Absaugvorrichtung besteht aus dem ringförmigen Saugkopf 2, der über das in der Bohrmaschine eingespannte Bohrwerkzeug 3 übergestülpt ist. In den Saugkopf 2 mündet der radial abstehende Anschlußstutzen 4, der über einen flexiblen Schlauch 5 mit einem Sauggebläse verbunden sein kann. Zur Halterung ist am Saugkopf 2 ein radial abstehender, zur Wand hin offener U-Träger 6 angeordnet, dessen Boden 7 mit einem Langloch 8 versehen ist. In der offenen Seite des U-Trägers 6 ist das in seiner Breite dem lichten Maß zwischen den beiden Schenkeln des U-Trägers 6 entsprechende Unterteil 9 des Klemmstückes eingesetzt. Durch das Langloch 8 im Boden 7 des U-Trägers 6 ist das mit einem Außengewinde 10 versehene Oberteil 11 des Klemmstückes in das entsprechende Innengewinde 12 des Unterteiles 9 derart eingeschraubt, daß der Boden 7 des U-Trägers zwischen Ober- und Unterteil des Klemmstückes verspannt ist. Zum Zusammenschrauben der beiden Teile weist das Oberteil 11 einen gerändelten Drehknopf 13 auf. Zur Verbesserung der Fixierung des Klemmstückes sind sowohl die Innenfläche des Bodens 7 des U-Trägers 6 als auch die Stirnseite des Unterteiles 9 mit ineinandergreifenden Rastrippen 14 versehen. Über das Klemmstück können Unterschiede im Abstand des Anschlagstabes 15 zur Bohrerachse so ausgeglichen werden, daß der Bohrer 3 genau mittig im Saugkopf 2 verläuft. Über den in der Aufnahme 16 des Oberteiles 11 des Klemmstückes eingepreßten Anschlagstab 15 ist der Saugkopf 2 mit der Bohrmaschine 1 verbunden. Im dargestellten Ausführungsbeispiel ist der Anschlagstab 15 über eine Klemmschraube 17 im Seitenhandgriff 18 der Bohrmaschine 1 befestigt.

Die Art dieser Halterung ist für alle Vorrichtungen zweckmäßig, die fluchtend zur Werkzeugachse angeordnet sein müssen. Besonders vorteilhaft ist diese Halterung auch für Bohrvorrichtungen, die die Herstellung von hinterschnittenen Bohrlöchern ermöglichen. Bei solchen Bohrvorrichtungen entsteht unter Umständen ein auf die Bohrvorrichtung wirkendes Drehmoment durch das Bohrwerkzeug, das durch die erfindungsgemäße Halterung ebenfalls aufgenommen wird.

**Patentansprüche**

1. Befestigungseinrichtung für eine Bohr- und/oder Absaugglocke an Bohrmaschinen, die einen an der Bohrmaschine (1) verschieb- und festsetzbar gehaltenen Anschlagstab (15) aufweisen, wobei die Befestigungseinrichtung als radial von der Glocke (2) abstehender und zur Wand hin offener U-Träger (6) ausgebildet ist, dadurch gekennzeichnet, daß im Boden (7) des U-Trägers (6) ein radial zur Glocke (2) verlaufendes Langloch (8) ausgebildet ist, und daß ein mit dem Anschlagstab (15) verbundenes, aus Unter- (9) und Oberteil (11) bestehendes Klemmstück an dem U-Träger (6) festsetzbar ist.

2. Befestigungseinrichtung nach Anspruch 1, dadurch gekennzeichnet, daß der Boden des U-Trägers (6) zwischen dem miteinander verschraubbaren Unter- (9) und Oberteil (11) des Klemmstückes eingespannt ist.

3. Befestigungseinrichtung nach Anspruch 1, dadurch gekennzeichnet, daß das in der offenen Seite eingesetzte Unterteil (8) des Klemmstückes an seiner am Boden (7) des U-Trägers (6) anliegenden Stirnseite, sowie die Innenfläche des Bodens (7) des U-Trägers (6) mit Rastrippen (14) versehen sind.

4. Befestigungseinrichtung nach Anspruch 1, dadurch gekennzeichnet, daß das Oberteil (11) des Klemmstückes mit einer dem Profil des Anschlagstabes (15) angepaßten Aufnahme (16) versehen ist.

**Claims**

1. Fastening arrangement for a drill surround and/or suction surround on drills that have a stop rod (15) so mounted on the drill (1) that it may be displaced or rigidly fixed, the fastening arrangement being formed as a U-shaped support (6) projecting radially from the surround (2) and being open towards the wall, characterised in that an elongate hole (8) running radially with respect to the surround (2) is formed in the base (7) of the U-shaped support (6), and a clamping piece joined to the stop rod (15) and comprising a bottom part (9) and a top part (11) is fixable to the U-shaped support (6).

2. Fastening arrangement according to claim 1, characterised in that the base of the U-shaped support (6) is clamped between the bottom part (9) and the top part (11) of the clamping piece, which parts can be screwed together.

3. Fastening arrangement according to claim 1, characterised in that the bottom part (9) of the clamping piece inserted in the open side is provided on its end face lying against the base (7) of the U-shaped support (6) with locking ridges (14), and the inner face of the base (7) of the U-shaped support (6) is also provided with locking ridges (14).

4. Fastening arrangement according to claim 1, characterised in that the top part (11) of the clamping piece is provided with a recess (16) matching the profile of the stop rod (15).

**Revendications**

1. Dispositif de fixation d'une cloche de perçage et/ou d'aspiration sur des perceuses qui comportent une tige (15) de butée, maintenue de façon à pouvoir être déplacée et immobilisée sur la perceuse (1), ce dispositif ayant la conformation d'un support (6) en U, qui part radialement de la cloche (2) et est dégagé du côté de la paroi, dispositif caractérisé en ce qu'une boutonnière (8), orientée radialement par rapport à la cloche (2), est formée dans le fond (7) du support (6) en U et en ce qu'un organe de serrage, composé d'un élément inférieur (9) et d'un élément supérieur (11) et relié à la tige (15) de butée, peut être fixé à ce support (6).

2. Dispositif de fixation selon la revendication 1, caractérisé en ce que le fond du support (6) en U est serré entre l'élément inférieur (9) et l'élément supérieur (11), vissés l'un dans l'autre, de l'organe de serrage.

3. Dispositif de fixation selon la revendication 1, caractérisé en ce que la face d'extrémité, appliquée contre le fond (7) du support (6) en U, de l'élément inférieur (9) de l'organe de serrage inséré dans le côté ouvert de ce support, ainsi que la surface intérieure de ce fond (7), présentent des nervures (14) en forme de crans.

4. Dispositif de fixation selon la revendication 1, caractérisé en ce que l'élément supérieur (11) de l'organe de serrage comporte un évidement (16) adapté au profil de la tige (15) de butée.